**Europäisches Patentamt**

**European Patent Office**

**Office européen des brevets**

(19)

(11) Veröffentlichungsnummer: **0 003 472**
**B1**

(12) **EUROPÄISCHE PATENTSCHRIFT**

(45) Veröffentlichungstag der Patentschrift: **16.09.81**

(51) Int. Cl.³: **C 01 B 7/01, C 07 C 85/26**

(21) Anmeldenummer: **78101624.1**

(22) Anmeldetag: **09.12.78**

(54) Verfahren zur Abspaltung von Chlorwasserstoff aus Lösungen von Aminhydrochloriden.

(30) Priorität: **13.02.78 DE 2805933**

(43) Veröffentlichungstag der Anmeldung:
**22.08.79 Patentblatt 79/17**

(45) Bekanntmachung des Hinweises auf die Patenterteilung:
**16.09.81 Patentblatt 81/37**

(84) Benannte Vertragsstaaten:
**BE DE FR GB IT NL**

(56) Entgegenhaltungen:
**US - A - 2 541 458**

**CHEMICAL ABSTRACTS, Vol. 75, 1971,
Zusammenfassung Nr. 62889d, Columbus, Ohio,
USA
LESIAK TADEUSZ et al.: "Kinetics of thermal
decomposition of amine hydrochlorides in
chlorobenzene", Seite 382, rechte Spalte**

(73) Patentinhaber: **CHEMISCHE WERKE HÜLS AG
Postfach 1320
D-4370 Marl 1 (DE)**

(72) Erfinder: **Coenen, Alfred, Dr.
Guido-Heiland-Strasse 3
D-4370 Marl (DE)**
Erfinder: **Kosswig, Kurt, Dr.
Hoechster Strasse 10
D-4370 Marl (DE)**
Erfinder: **Hentschel, Bernhard, Dr.
Bitterfelder Strasse 9a
D-4370 Marl (DE)**
Erfinder: **Ziebarth, Jürgen
Alberskamp 1
D-4370 Marl (DE)**

Courier Press, Leamington Spa, England.

## Verfahren zur Abspaltung von Chlorwasserstoff aus Lösungen von Aminhydrochloriden

Bisher sind zur Gewinnung von HCl aus Aminhydrochloriden nur Verfahren bekannt, bei denen das HCl durch Umsetzen des Aminhydrochlorids mit einer schwer flüchtigen Säure freigesetzt werden kann. Das Amin fällt dabei in Salzform an.

Nach dem Verfahren der DE - B - 26 33 640 erhält man gasförmigen Chlorwasserstoff sowie auch das Amin in freier Form, indem man ein bestimmtes Aminhydrochlorid, dessen Aminkomponente aus speziellen tertiären Alkylaminen, tertiären Aryldialkylaminen, sekundären Arylalkylaminen, primären Alkylarylaminen oder Mischungen davon besteht, in einem inerten, weitgehend unpolaren Lösemittel bei Sumpftemperaturen zwischen 100 und 250°C am Rückfluß destilliert, wobei man am Kopf der Kolonne den freiwerdenden gasförmigen Chlorwasserstoff abzieht. Infolge der Rückflußdestillation ist dieses Verfahren jedoch energieaufwendig.

Daraus ergibt sich die Aufgabe, ein Verfahren zu finden, bei dem man in einfacher Weise ohne Energieaufwand für die Verdampfungswärme gasförmigen Chlorwasserstoff und auch das Amin in freier Form erhält.

Diese Aufgabe wird durch das in dem Patentanspruch beschriebene Verfahren gelöst.

Es konnte überraschenderweise gefunden werden, daß der Chlorwasserstoff aus bestimmten Aminhydrochloriden allein durch Durchleiten eines unter den angewandten Bedingungen inerten Gases durch die Lösung des Aminhydrochlorids abgespalten und vom Amin wegtransportiert werden kann. Oberhalb 100°C haben die mit Lösemitteln verdünnten Aminhydrochloride bereits Chlorwasserstoffdampfdrücke, die die Gewinnung von reinem Chlorwasserstoff im Gemisch mit einem Inertgas emöglichen.

Geeignete Aminhydrochloride sind solche, deren Aminkomponente aus tertiären Alkylaminen, tertiären Aryldialkylaminen, sekundären Arylalkylaminen, primären Alkylarylaminen sowie gegebenenfalls Mischungen dieser Amine bestehen. Die Amine sollen 14 bis 36 Kohlenstoffatome in den stickstoffgebundenen Seitenketten besitzen, eine der aliphatischen stickstoffgebundenen Seitenkeiten muß mindestens 6 Kohlenstoffatome besitzen, also ein Cyclohexyl-, Hexyl-, Isohexyl- rest sein, und die Aminogruppe darf höchstens eine Methylgruppe tragen, beispielsweise Trihexylamin, Triheptylamin, Trioctylamin, Cyclohexyldiisooctylamin, Tri-2-ethylhexylamin, Di-2-Ethylhexylmethylamin, Didecylethylamin, Tri-dodecylamin, Didodecylmethylamin, Dodecyldiisopropylamin, Dodecyldibutylamin, Dodecyldiisobutylamin, Dodecylisobutylmethylamin, Diisopentadecylmethylamin, Diisopentadecylethylamin, Diisopentadecylisopropylamin, N-octylanilin, N-2-ethylhexylanilin, N-Lauryl-anilin, N-isotridecylanilin, N-Isopentadecyl-anilin, N-Stearylanilin; N,N-Dihexylanilin, N,N-Dioctylanilin, N,N-Di-2-ethylhexylanilin, N,N-Di-dodecylanilin, D-Dodecyl-N-methylanilin, N-Dodecyl-N-ethylanilin, D-Dodecyl-N-hexylanilin, N,N-Dihexyl-p-toluidin, N,N-Di-2-ethylbutyl-p-toluidin, N,N-Diheptyl-p-toluidin, N,N-Dioctyl-p-toluidin, N,N-Di-2-ethylhexyl-p-toluidin, p-Isooctylanilin.

Als Lösemittel verwendet man organische Flüssigkeiten, die unter den Bedingungen des Verfahrens gegen Wasser, Chlorwasserstoff, Amine und Temperaturbelastung inert sind und oberhalb 120°C sieden. Der Siedepunkt sollte möglichst hoch liegen. Er liegt mindestens 20°C über der Temperatur, auf die die Mischung aus Aminhydrochlorid und Lösemittel erhitzt wird.

Eine Obergrenze für den Siedepunkt besteht nicht, jedoch wird sich eine gewisse Obergrenze aus praktischen Gründen durch die anderen physikalischen Eigenschaften, wie Viskosität oder Schmelzpunkt, ergeben. Dafür geeignet sind insbesondere geradkettige oder verzweigte, aliphatische oder cycloaliphatische, aromatische oder araliphatische Kohlenwasserstoffe sowie Gemische dieser Verbindungen oder entsprechende Erdölfraktionen, z.B. Decan, Tetralin, Dekalin, Tetradecan, Xylol, Durol, Isobutylbenzol, Pentylbenzol oder Dodecylbenzol. Es können aber auch offenkettige oder ringförmige Ether, wie z. B. Dibutylether, Diisobutylether, Hexylmethylether, Anisol oder Diphenylether, Abkömmliche von Tetrahydrofuran und -pyran und des 1.4-Dioxans verwandt werden, ferner in $\alpha$-Stellung verzweigte (nicht kondensationsfähige) Ketone oder cyclische Ketone, wie Diisopropylketon oder 2.6-Dimethylcyclohexanon und auch Benzolderivate, wie Chlor-, Dichlor- oder Nitrobenzol. Von den gesättigten oder ungesättigten aliphatischen Chlorkohlenwasserstoffen kommen nur perchlorierte Verbindungen infrage; Chloraliphaten, die noch Wasserstoffatome als Substituenten tragen, können unter dem Einfluß des Amins Chlorwasserstoff abspalten.

Der Chlorwasserstoff-Partialdruck über Aminhydrochloriden steigt mit steigender Konzentration des Lösemittels, ein Effekt, der sehr überrascht. So weist z. B. eine 80prozentige Lösung von Tri-(2-ethylhexyl)-amin-hydrochlorid in Tetradecan bei 140°C einen Chlorwasserstoffdruck von 14 mbar, eine 20prozentige Lösung hingegen einen solchen von 37 mbar auf.

Die für die Thermolyse vorgesehenen Lösungen der Aminhydrochloride müssen weitgehend wasserfrei sein, da Wasser die Abspaltung von Chlorwasserstoff hemmt. Das Wasser muß gegebenenfalls vor der Spaltung entfernt werden, z. B. durch Abdestillieren mittels eines Schleppmittels. Je unpolarer das Lösemittel, desto höher ist der Chlorwasserstoff-Partialdruck über der Lösung Kohlenwasserstoffe, wie Alkane oder Alkylaromaten, sind deshalb für das Verfahren besonders geeignet. Die Lösemittel sollen bei Spalttemperatur möglichst niedrige Dampfdrücke haben, ihr Siedepunkt soll möglichst hoch und muß mindestens 20°C über der Spalttemperatur liegen, um den Austrag als Dampf im Inertgasstrom möglichst niedrig zu halten. Die Lösemittel werden in einem Verhältnis Aminhydrochlorid zu Lösemittel wie 1 : 9 bis 9 : 1, vorzugsweise 1 : 4 bis 4 : 1 eingesetzt. Mit steigender Lösemittelmenge steigt der Partialdruck des Chlorwasserstoffs über der Lösung, der Verdünnung des Aminhydrochlorids sind aber durch die mit der Verdünnung steigende Produktmenge aus praktischen Gründen Grenzen gesetzt.

Die Lösungen von Aminhydrochloriden, aus denen man auf beschriebenem Wege durch Thermolyse Chlorwasserstoff gewinnt, erhält man vorzugsweise durch Extraktion verdünnter Salzsäuren. Es können aber auch Aminhydrochloride, die auf andere Weise erhalten wurden, nach dem erfindungsgemäßen Verfahren in Chlorwasserstoff und Amin zerlegt werden. So eignen sich z. B. die Hydrochloride von tert. aliphatischen Aminen, wie sie bei der Umsetzung von Alkylchloriden mit Ammoniak anfallen, gleichfalls für das erfindungsgemäße Verfahren.

Erfindungsgemäß erhält man gasförmigen Chlorwasserstoff aus den Aminhydrochloriden, indem man diese in einem inerten Lösemittel, dessen Siedepunkt mindestens 20°C über der Temperatur liegt, auf die die Mischung aus Aminhydrochlorid und Lösemittel erhitzt wird, vorzugsweise in einem Kohlenwasserstoff, auf 100 bis 250°C, vorzugsweise auf 120 bis 230°C erhitzt und durch die Lösungen ein unter den vorliegenden Bedingungen inertes Gas durchleitet.

Der angegebene Temperaturbereich ist nach unten durch den dann zu gering werdenden Chlorwasserstoff-Partialdruck der Aminhydrochloride, nach oben durch die thermische Instabilität der Amine begrenzt.

Als inerte Gase können alle Gase eingesetzt werden, die unter den vorherrschenden Bedingungen chemisch inert sind, also z. B. Argon, Stickstoff, Methan, Ethan, Propan, Ethylen, Propylen. Inertgas und Lösung müssen durch entsprechende Einrichtungen, wie Fritten, Rührer u. ä., in innigen Kontakt gebracht werden, um den sich zwischen flüssiger und gasförmiger Phase schnell einstellenden Gleichgewichtszustand ständig zu stören. Die einzuleitende Gasmenge zur Gewinnung einer bestimmten Menge Chlorwasserstoff richtet sich nach dem Partialdruck, der sich, abhängig von Temperatur und Verdünnungsmittel, über dem Aminhydrochlorid einstellt.

So wurden z. B. bei 140°C für das Hydrochlorid des Tri-(2-ethylhexyl)-amins folgende Chlorwasserstoff-Partialdrücke über 20 Gewichtsprozent Aminhydrochlorid und 80 Gewichtsprozent Lösemittel enthaltenden Lösungen gemessen:

| Lösemittel | mbar (HCl) |
| --- | --- |
| Tri-(2-ethylhexyl)-amin | 8 |
| Hexachlorbutadien | 17 |
| Dodecylbenzol | 32 |
| Tetradecan | 37 |
| Octadecan | 49 |

Die Inertgasmenge wird im allgemeinen zweckmäßigerweise so bemessen, daß der HCl-Anteil im HCl-Inertgas-Gemisch 3 Volumenprozent nicht unterschreitet.

Das Verfahren kann kontinuierlich und diskontinuierlich durchgeführt werden. Bei kontinuierlicher Fahrweise führt man Inertgas und Lösung im Gegenstrom, um eine möglichst starke Anreicherung des Chlorwasserstoffs im Inertgas zu erreichen. Bei Gegenstromfahrweise lassen sich HCl-Konzentrationen von über 50% erreichen.

Aus dem HCl-Inertgas-Gemisch kann der Chlorwasserstoff leicht auf bekannte Art, z. B. Adsorption, rein hergestellt werden, jedoch ist dies je nach Verwendungszweck des HCl nicht in allen Fällen erforderlich. Verwendet man z. B. als Trägergas Ethylen, dann kann das erhaltene Gasgemisch direkt zur Synthese von Chlorethanen eingesetzt werden.

Einer der großen Vorteile des Verfahrens besteht darin, daß das Amin in freier, verwendungsfähiger Form anfällt. Es ist dabei nicht unbedingt notwendig, das Amin von dem verwendeten Lösemittel zu trennen, da für viele Zwecke, z. B. die Extraktion von Chlorwasserstoff aus verdünnter Salzsäure, die Mischung aus Amin und Lösemittel als solche benutzt werden kann.

### Beispiel 1

Die Apparatur zur Spaltung der Aminhydrochloride bestand aus einem zylindrischen Glasgefäß, welches bis zum oberen Rand von einem Mantel umgeben war, durch den thermostatisiertes Wärmeträgeröl gepumpt wurde. Das Gefäß hatte oben drei Stutzen, durch den mittleren wurde Produkt eingefüllt, gegebenenfalls auch Lösemittel nachdosiert, er war während des Versuches verschlossen. Durch den zweiten Stutzen führte ein Rohr bis zum Boden des Gefäßes, durch dieses Rohr wurde Inertgas in die Flüssigkeit eingeleitet. Durch den dritten Stutzen wurden die Gase abgeleitet, der Chlorwasserstoff wurde in Natronlauge aufgefangen.

Im Reaktionsgefäß wurden 26,7 g einer Lösung von 5,3 g Tri-(2-ethylhexyl)-amin-hydrochlorid in 21,3 g Octadecan auf 140°C erhitzt. Durch die Lösung wurden stündlich 47 l Stick-

stoff geleitet. Die Lösung enthielt anfangs 0,51 g Chlorwasserstoff. Nach 7 min waren davon 57%, nach 15 min 88% und nach 35 min 96% gasförmig übergegangen.

### Beispiel 2

In der in Beispiel 1 beschriebenen Apparatur wurden 7,2 g Tri-(2-ethylhexyl)-amin-hydrochlorid, gelöst in 28,9 g Octadecan vorgelegt. Bei 139°C wurden 170 l Stickstoff/h durch die Lösung geleitet. Von den 0,69 g Chlorwasserstoff, die ursprünglich in der Lösung enthalten waren, waren nach 3 min 48%, nach 6 min 83% und nach 10 min 96% als gasförmiger Chlorwasserstoff abgespalten.

### Beispiel 3

In der in Beispiel 1 beschreibenen Apparatur wurden 29,6 g einer Lösung von 5,9 g Tri-(2-ethylhexyl)-amin-hydrochlorid in 23,7 g Tetradecan unter Durchleiten von 47 l Ethylen/h auf 141°C erhitzt. Die Lösung enthielt ursprünglich 0,55 g Chlorwasserstoff. Nach 7 min waren 51%, nach 15 min 78% und nach 29 min 96% Chlorwasserstoff abgespalten.

### Beispiel 4 (zum Vergleich)

In der in Beispiel 1 beschriebenen Apparatur wurden 6,5 g Tri-(2-ethylhexyl)-amin-hydrochlorid in 25,9 g Tri-(2-ethylhexyl)-amin unter Durchleiten von 47 l Ethylen/h auf die hohe Temperatur von 197°C erhitzt. Die Lösung enthielt 0,62 g Chlorwasserstoff, davon waren nach 6 min durch das Ethylen 40%, nach 12 min 61%, nach 23 min 69% und nach 35 min erst 81% ausgetragen.

### Beispiel 5

5,8 g Trioctylamin-hydrochlorid, gelöst in 23,0 g Octadecan wurden in der in Beispiel 1 beschriebenen Apparatur auf 162°C erhitzt. Durch die Lösung wurden stündlich 47 l Stickstoff geleitet. Von 0,54 g Chlorwasserstoff waren nach 15 min 11%, nach 50 min 22% im Stickstoffstrom ausgetragen.

### Beispiel 6

Das Beispiel 5 wurde bei 183°C wiederholt. Nach 15 min waren 23%, nach 50 min 44% Chlorwasserstoff abgespalten.

### Beispiel 7

Das Beispiel 5 wurde bei 207°C wiederholt. Nach 15 min waren 45%, nach 50 min 81% Chlorwasserstoff mit dem Stickstoff ausgetragen.

### Beispiel 8

Das Beispiel 5 wurde bei 233°C wiederholt. Nach 15 min waren bereits 71% mit dem Stickstoff ausgetragen.

### Beispiel 9

Um ein Maß für die effektive Spaltgeschwindigkeit von Tri-(2-ethylhexyl)-amin-hydrochlorid (TEHA-hydrochlorid) in Abhängigkeit von Lösemittelzusatz zu bekommen, wurden in der in Beispiel 1 beschriebenen Apparatur Spaltversuche bei 140°C durchgeführt. In der Tabelle ist die in den ersten 10 min abgespaltene Menge Chlorwasserstoff, in Prozenten, des ursprünglich in der Lösung vorhandenen Chlorwasserstoffs und bezogen auf 0,3 l durchgeleiteten Stickstoff sowie auf 1 g vorgelegtes TEHA-hydrochlorid, abhängig von der Art des Lösemittels, angegeben. Eingesetzt wurden 20 Teile TEHA-hydrochlorid in 80 Teilen Lösemittel.

| Lösemittel | % abgespaltenes HCl |
|---|---|
| Tetradecan | 15 |
| Octadecan | 23 |
| Dodecylbenzol | 15 |
| TEHA (z. Vgl.) | 4 |

### Beispiel 10

Die Geschwindigkeit der Chlorwasserstoffabspaltung steigt mit steigender Geschwindigkeit, mit der Inertgas durch eine Aminhydrochlorid-Lösung geleitet wird.

Analog dem Beispiel 1 wurde durch Lösungen von 20 Gewichtsprozent Tri-(2-ethylhexyl)-amin-hydrochlorid in 80 Gewichtsprozent Tetradecan bei 142°C Inertgas mit verschiedenen Geschwindigkeiten geleitet. In den ersten 10 min wurden, auf das Gramm Aminhydrochlorid bezogen, folgende Prozente der theoretischen Menge Chlorwasserstoff abgespalten:

| 0,54 l Stickstoff/10 min | 36% |
|---|---|
| 1,3 l Ethylen/10 min | 63% |
| 3,2 l Stickstoff/10 min | 88% |

**Patentanspruch**

Verfahren zur Abspaltung von Chlorwasserstoff aus Lösungen von Aminhydrochloriden, wobei man ein Aminhydrochlorid, dessen Aminkomponente aus tertiären Alkylaminen, tertiären Aryldialkylaminen, sekundären Arylalkylaminen, primären Alkylarylaminen oder Mischungen davon, die 14 bis 36 Kohlenstoffatome in den stickstoffgebundenen Seitenketten enthalten, davon im Falle der tertiären Alkylamine und der tertiären Aryldialkylamine mindestens einen, und im Falle der sekundären Arylalkylamine einen stickstoffgebundenen, mindestens 6 Kohlenstoffatome enthaltenden aliphatischen Rest, und im Falle der tertiären Alkylamine höchstens eine stickstoffgebundene Methylgruppe, in einem inerten organischen, weitgehend unpolaren Lösemittel unter Durchleiten eines inerten Gasstromes auf 100 bis 250°C erhitzt, dadurch gekennzeichnet, daß der Siedepunkt des Lösemittels mindestens 20°C über der Temperatur liegt, auf die die Mischung aus Aminhydrochlorid und Lösemittel erhitzt wird.

## Revendication

Procédé de libération d'acide chlorhydrique à partir de solutions de chlorhydrates d'amine, en chauffant un chlorhydrate d'amine à 100—250°C dans un solvant organique inerte largement apolaire tout en faisant passer un courant de gaz inerte, chlorhydrate dont le constituant amine consiste en alkylamines tertiaires, aryldialkylamines tertiaires, aryl-alkylamines secondaires, alkylarylamines primaires ou en mélanges de celles-ci, dont les chaînes latérales liées à l'azote contiennent de 14 à 36 atomes de carbone et comprennent au minimum un radical aliphatique lié à azote et contenant au moins 6 atomes de carbone dans le cas des alkylamines tertiaires et des aryl-dialkylamines tertiaires, et un dans le cas des arylalkylamines secondaires, et au maximum un groupe méthyle lié l'azote dans le cas des alkylamines tertiaires, caractérisé par le fait que le point d'ebullition du solvant se situe à 20°C au minimum au-dessus de la température à laquelle est chauffé le mélange de chlorhydrate d'amine et de solvant.

## Claim

A process for splitting off hydrogen chloride from a solution of an amine hydrochloride wherein the amine hydrochloride used is a compound of which the amine component is selected from tertiary alkylamines, tertiary aryldialkylamines, secondary arylalkylamines, primary alkylarylamines or mixtures thereof containing 14 to 36 carbon atoms in the nitrogen-bonded side chains, wherein the tertiary alkylamines and the tertiary aryldialkylamines have at least one, the secondary arylalkylamines have one nitrogen-bonded aliphatic radical containing at least 6 carbon atoms, and the tertiary alkylamines have at most one nitrogen-bonded methyl group, and wherein this amine hydrochloride is heated at 100 to 250°C in an inert organic, essentially non-polar solvent while passing an inert gas stream through the solvent, characterized in that the boiling point of the solvent used is at least 20°C above the temperature to which the amine hydrochloride is heated in the solvent.